# EUROPÄISCHE PATENTSCHRIFT

(11) **EP 4 301 612 B1**
(45) Veröffentlichungstag und Bekanntmachung des Hinweises auf die Patenterteilung: **15.04.2026**
(21) Anmeldenummer: 22703385.9
(22) Anmeldetag: 03.02.2022
(51) Int. Cl.: B60C 23/04

(54) **VERFAHREN ZUM BETREIBEN EINER ÜBERWACHUNGSVORRICHTUNG FÜR ZUMINDEST EINEN FAHRZEUGPARAMETER**
METHOD FOR OPERATING A MONITORING DEVICE FOR AT LEAST ONE VEHICLE PARAMETER
PROCÉDÉ DE FONCTIONNEMENT D'UN DISPOSITIF DE SURVEILLANCE POUR AU MOINS UN PARAMÈTRE DE VÉHICULE

(30) Priorität: 04.03.2021 DE 102021202101
(43) Veröffentlichungstag der Anmeldung: 10.01.2024
(73) Patentinhaber: Robert Bosch GmbH, 70442 Stuttgart (DE)
(72) Erfinder: REICHERT, Christian, 72622 Nuertingen (DE); NAGEL, Joachim, 72770 Reutlingen (DE); HAJJI, Ouael, 70178 Stuttgart (DE); CLASS, Juergen, 71364 Winnenden (DE)
(86) Internationale Anmeldenummer: PCT/EP2022/052521
(87) Internationale Veröffentlichungsnummer: WO 2022/184364

(56) Entgegenhaltungen:
- US-A1- 2005 110 623
- US-A1- 2019 184 774
- US-A1- 2020 254 830
- US-B1- 10 206 231

## Beschreibung

### Technisches Gebiet

Die Erfindung betrifft ein Verfahren zum Betreiben einer Überwachungsvorrichtung für zumindest einen Fahrzeugparameter, insbesondere ein Reifendrucküberwachungssystem für den Fahrzeugparameter Reifendruck.

Die Erfindung betrifft weiter eine Überwachungsvorrichtung für zumindest ein Fahrzeugparameter eines Fahrzeugs, insbesondere ein Reifendrucküberwachungssystem für den Fahrzeugparameter Reifendruck.

### Stand der Technik

Obwohl allgemein auf beliebige Überwachungsvorrichtungen anwendbar wird die vorliegende Erfindung in Bezug auf Reifendruckkontrollsysteme, auch Tire Pressure Monitoring System - TPMS - genannt, beschrieben.

Reifendruckkontrollsysteme dienen der Überwachung des Reifendrucks bei Kraftfahrzeugen, um Unfälle durch fehlerhaften Reifendruck zu verhindern. Mit dem auf das jeweilige Fahrzeug abgestimmten, optimalen Reifendruck lässt sich sowohl der Kraftstoffverbrauch als auch der Reifenverschleiß verringern. Reifendruckkontrollsysteme können eine Veränderung des Luftdrucks im jeweiligen Reifen sowohl aktiv mit elektronischen Drucksensoren detektieren, die den Luftdruck und eine Identifizierung per Funk in gewissen Zeitintervallen an ein Steuergerät übermitteln, als auch passiv anhand einer Veränderung des Abrollumfangs und anhand einer Veränderung einer charakteristischen Schwingungsfrequenz des jeweiligen Rades.

Das Reifendruckkontrollsystem kann nicht nur in einem Fahrmodus, also wenn sich das Fahrzeug bewegt und aktiv der Luftdruck überwacht werden muss, betrieben werden, sondern auch in einem Standmodus, wenn das Fahrzeug steht, beispielsweise zu Reparaturzwecken. In dem Standmodus versucht das Reifendruckkontrollsystem sich mit einer externen Wartungsvorrichtung zu verbinden. Da der Standmodus ebenfalls im Falle eines Stillstands des Fahrzeugs in einem Stau oder dergleichen eingenommen wird, versuchen nun sämtliche Sensoren von jedem Fahrzeug eine entsprechende Verbindung mit einer externen Wartungsvorrichtung durch Aussenden von Verbindungsinformationen herzustellen, was zu einer Überlastung der entsprechenden Funkfrequenzen führt und zudem unnötig Energie verbraucht.

Das Dokument US 2019/184774 A1 beschreibt ein Reifendruckkontrollsystem.

Die Schrift US 2020/254830 A1 umfasst ein Luftdruckmessgerät für Reifen.

Das Dokument US 10 206 231 B1 beschreibt ein Modul und ein System für ein Reifendruckkontrollsystem, sowie ein Verfahren zur Bestätigung von Datenübertragungen für Reifendruckkontrollsysteme.

Die Schrift US 2005/110623 A1 umfasst ein Verfahren zum Überwachen des Reifendrucks bei Fahrzeugen.

### Offenbarung der Erfindung

In einer Ausführungsform stellt die vorliegende Erfindung ein Verfahren zum Betreiben einer Überwachungsvorrichtung für zumindest einen Fahrzeugparameter, insbesondere ein Reifendrucküberwachungssystem für den Fahrzeugparameter Reifendruck mit den Merkmalen des Anspruchs 1 bereit.

In einer weiteren Ausführungsform stellt die vorliegende Erfindung eine Überwachungsvorrichtung für zumindest ein Fahrzeugparameter eines Fahrzeugs, insbesondere ein Reifendrucküberwachungssystem für den Fahrzeugparameter Reifendruck mit den Merkmalen des Anspruchs 9 bereit.

In einer weiteren Ausführungsform stellt die vorliegende Erfindung ein Fahrzeug mit einer Überwachungsvorrichtung gemäß Anspruch 10 bereit.

Einer der damit erzielten Vorteile ist, dass Energie eingespart wird. Ein weiterer damit möglicher Vorteil ist, dass ein "Jamming", das heißt ein Überladen der entsprechenden Frequenzbereiche durch Aussenden von Verbindungsnachrichten oder -signalen beim Wechsel vom Fahrmodus in den Standmodus vermieden wird.

Die Formulierung "passiv suchen" ist im weitesten Sinne zu verstehen und bezieht sich, insbesondere in den Ansprüchen, vorzugsweise in der Beschreibung, auf einen Betriebszustand, in dem Signale empfangen werden können, jedoch keine eigenen Signale zur Verbindungsaufnahme ausgesendet werden.

Die Formulierung "externe Vorrichtung" ist im weitesten Sinne zu verstehen und bezieht sich insbesondere in den Ansprüchen, vorzugsweise in der Beschreibung, auf jegliche Vorrichtung außerhalb der Überwachungsvorrichtung. Eine "externe Vorrichtung" ist insbesondere nicht auf Vorrichtungen außerhalb eines Fahrzeugs beschränkt, sondern bezieht sich auch auf Vorrichtungen innerhalb eines Fahrzeugs.

Weitere Merkmale, Vorteile und weitere Ausführungsformen der Erfindung sind im Folgenden beschrieben oder werden dadurch offenbar.

Erfindungsgemäß erfolgt der Wechsel vom Fahrmodus in den ersten Zwischenmodus bei Unterschreiten eines ersten Fahrgeschwindigkeitsschwellwerts, insbesondere wobei der der Wechsel vom Fahrmodus in den ersten Zwischenmodus bei Stillstand des Fahrzeugs erfolgt und wobei der Wechsel von dem ersten Zwischenmodus in den Fahrmodus bei Überschreiten eines zweiten Fahrgeschwindigkeitsschwellwerts erfolgt, wobei die beiden Fahrgeschwindigkeitsschwellwerte unterschiedlich sind, vorzugsweise wobei der zweite Fahrgeschwindigkeitsschwellwert größer ist als der erste Fahrgeschwindigkeitsschwellwert. Einer der damit erzielten Vorteile ist, dass damit ein einfacher und schneller Wechsel in den ersten Zwischenmodus erfolgen kann. Gleichzeitig wird - beispielsweise wenn das Fahrzeug im Stau steht - erst wieder in den Fahrmodus gewechselt, wenn ein entsprechender Schwellwert nach oben überschritten wird. Zwei voneinander unabhängige Schwellwerte, die gegebenenfalls auch anpassbar sind, erhöhen die Flexibilität.

Gemäß einer weiteren vorteilhaften Weiterbildung der Erfindung erfolgt der Wechsel vom ersten Zwischenmodus in den Standmodus nach Ablauf einer vorgegebenen Zeitspanne, insbesondere, wenn während der Zeitspanne keine externe Vorrichtung erkannt wurde. Vorteil hiervon ist, dass erst nach längerem Stillstand des Fahrzeugs die Überwachungsvorrichtung im Standmodus betrieben wird und aktiv Verbindungssignale aussendet, um sich mit der externen Vorrichtung zu verbinden.

Gemäß einer weiteren vorteilhaften Weiterbildung der Erfindung wird, wenn im ersten Zwischenmodus eine externe Vorrichtung erkannt wird, in einen zweiten Zwischenmodus gewechselt und die Überwachungsvorrichtung sendet Verbindungssignale zur Aufnahme einer Drahtlos-Verbindung mit der erkannten externen Vorrichtung aus. Damit wird eine einfache und zuverlässige Verbindung zwischen Überwachungsvorrichtung und externer Vorrichtung ermöglicht.

Gemäß einer weiteren vorteilhaften Weiterbildung der Erfindung wird, wenn im zweiten Zwischenzustand nach Ablauf einer vorgegebenen Zeitspanne, insbesondere, wenn während der Zeitspanne keine Drahtlos-Verbindung mit der erkannten externen Vorrichtung erfolgt ist, vom zweiten Zwischenzustand in den ersten Zwischenzustand gewechselt. Vorteil hiervon ist, dass weiterhin passiv nach einer externen Vorrichtung gesucht wird, ohne dass direkt in den Standmodus gewechselt wird. Somit kann beispielsweise wenn die externe Vorrichtung nicht beziehungsweise nur kurz in Reichweite war, immer noch innerhalb einer gewissen Zeitspanne eine Verbindungsaufnahme erfolgen, wenn die externe Vorrichtung wieder in Reichweite der Überwachungsvorrichtung gebracht wird.

Gemäß einer weiteren vorteilhaften Weiterbildung der Erfindung erfolgt, wenn eine erfolgte Drahtlos-Verbindung der Überwachungsvorrichtung mit der externen Vorrichtung unterbrochen und/oder abgebrochen wird, insbesondere nach einer vorgegebenen Zeitspanne, vorzugsweise wobei in dieser Zeitspanne keine Daten mehr zwischen externer Vorrichtung und Überwachungsvorrichtung übertragen wurden, ein Wechsel in den Standmodus. Somit werden unnötige (Wieder)Verbindungs-versuche vermieden, was Energie spart.

Gemäß einer weiteren vorteilhaften Weiterbildung der Erfindung wird im zweiten Zwischenzustand die Übertragungsleistung der Überwachungsvorrichtung zumindest zeitweise reduziert, wenn Verbindungssignale zum Verbinden mit der externen Vorrichtung ausgesendet werden. Damit kann sichergestellt werden, dass die externe Vorrichtung in der Nähe der Überwachungsvorrichtung ist, sodass eine zuverlässige Verbindung mit der externen Vorrichtung erfolgen kann.

Gemäß einer weiteren vorteilhaften Weiterbildung der Erfindung werden im ersten Zwischenzustand Identifikationsdaten einer erkannten externen Vorrichtung, insbesondere eine MAC-ID gespeichert und entsprechend im zweiten Zwischenzustand bei der Initiierung der Drahtlos-Verbindung mit der externen Vorrichtung genutzt. Vorteil ist eine einfache und schnelle Verbindung zwischen externer Vorrichtung und Überwachungsvorrichtung.

Gemäß einer weiteren vorteilhaften Weiterbildung der Erfindung beruht die Drahtlos-Verbindung auf Bluetooth, insbesondere auf der Bluetooth Low Energy-Funktechnik. Damit wird eine kostengünstige und einfache sowie zuverlässige Drahtlos-Verbindung zur Verfügung gestellt.

Weitere wichtige Merkmale und Vorteile der Erfindung ergeben sich aus den Unteransprüchen, aus den Zeichnungen und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

Dabei zeigen in schematischer Form
Fig. 1 Schritte eines Verfahrens gemäß einer Ausführungsform der vorliegenden Erfindung; und
Fig. 2 ein System gemäß einer Ausführungsform der vorliegenden Erfindung.

### Ausführungsformen der Erfindung

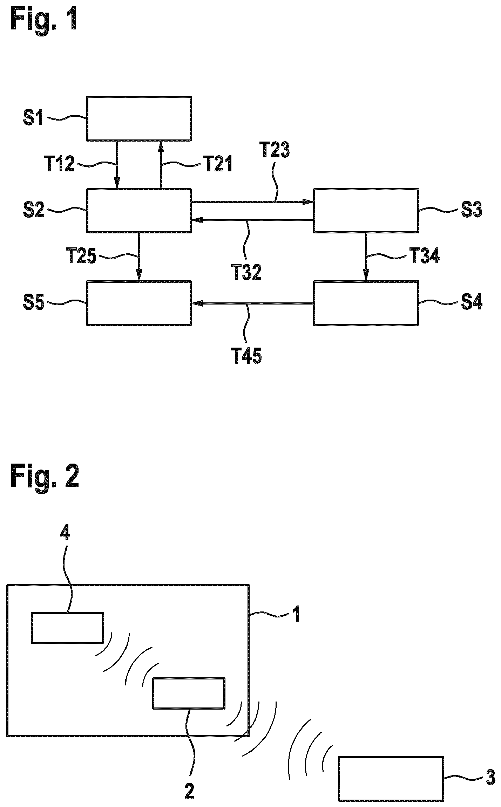

Figur 1 zeigt in schematischer Form Schritte eines Verfahrens gemäß einer Ausführungsform der vorliegenden Erfindung und Figur 2 ein System gemäß einer Ausführungsform der vorliegenden Erfindung.

Im Detail zeigt Figur 1 verschiedene Betriebszustände einer Überwachungsvorrichtung gemäß einer Ausführungsform der vorliegenden Erfindung. Die Überwachungsvorrichtung ist hier in Form eines Reifendrucksensors eines Fahrzeugs ausgebildet.

Im Fahrmodus S1 bewegt sich das Fahrzeug 1 und die Überwachungsvorrichtung in Form eines Reifendrucksensors 2 überwacht den Reifendruck in einem Reifen des Fahrzeugs. Hierzu besteht eine Drahtlos-Verbindung auf Basis des Bluetooth Low Energy Standards zwischen Reifendrucksensor 2 und einem Steuergerät 4 im Fahrzeug 1 und der Reifendrucksensor 2 sendet kontinuierlich sogenannte "advertisement indication frames" aus, mit denen die Anwesenheit des Reifendrucksensors 2 für das Steuergerät 4 angezeigt wird.

Verringert sich nun die Geschwindigkeit des Fahrzeugs 1 bis auf 0 km/h, das heißt das Fahrzeug 1 steht, erfolgt ein Wechsel T12 von dem Fahrmodus S1 als Betriebszustand des Reifendrucksensors 2 in einen ersten Zwischenmodus S2. In dem ersten Zwischenmodus S2 erfolgt durch den Reifendrucksensor 2 nun ein passiver Scan nach einer externen Vorrichtung in Form eines Programmiergeräts 3. Die genannten "advertisement indication frames" werden nicht mehr ausgesendet. Der passive Scan wird solange durchgeführt bis sich beispielsweise das Fahrzeug 1 wieder oberhalb einer vorgegebenen Geschwindigkeit, hier beispielsweise 5 km/h, bewegt. Dann erfolgt ein Wechsel T21 zurück in den Fahrmodus S1 des Reifendrucksensors 2. Wird im ersten Zwischenmodus S2 auf Grund des passiven Scans innerhalb einer vorgebbaren Zeitspanne kein Programmiergerät 3 erkannt, erfolgt ein Wechsel T25 in einen Standmodus S5, bei dem "advertisement indication frames" durch den Reifendrucksensor 2 ausgesendet werden.

Wird im ersten Zwischenmodus S2 auf Grund des passiven Scans die Anwesenheit eines Programmiergeräts 3 erkannt, erfolgt ein Wechsel T23 in einen zweiten Zwischenmodus S3, in dem nun aktiv Verbindungssignale - connection advertisement frames - durch den Reifendrucksensor 2 ausgesendet werden, um sich mit dem erkannten Programmiergerät 3 zu verbinden. Hierbei kann beispielsweise das erkannte Programmiergerät 3 mittels seiner MAC-Adresse identifiziert werden. Diese MAC-Adresse kann im Reifendrucksensor 2 gespeichert werden und später zur Verbindungsaufnahme genutzt werden, indem entsprechende "advertisement direct indications" ausgesendet werden. Die MAC-Adresse kann ebenfalls überprüft werden, wenn eine Verbindungsanfrage von einem Programmiergerät 3 erhalten wird. Ebenso kann im zweiten Zwischenmodus die Sendeleistung des Reifendrucksensors 2 während der Verbindungsaufnahme verringert werden, um sicherzustellen, dass das Programmiergerät 3 in unmittelbarer Nähe des Reifendrucksensors 2 ist und der gewünschte Reifendrucksensor 2 gewartet werden kann.

Erfolgt keine Verbindung mit dem erkannten Programmiergerät 3 nach einer gewissen Zeitspanne, erfolgt ein Wechsel T32 zurück in den ersten Zwischenmodus S2. Kommt hingegen eine Verbindung mit dem erkannten Programmiergerät 3 zustande, erfolgt ein Wechsel T34 des Reifendrucksensors 2 in einen Wartungsmodus S4, bei dem dann eine Verbindung mit dem Programmiergerät 3 zu Wartungszwecken besteht. Hierzu sendet das Programmiergerät 3 eine entsprechende Verbindungsanfrage - connection request - zu dem Reifendrucksensor 2.

Wird nun die Verbindung mit dem Programmiergerät 3 abgebrochen, beispielsweise wenn die Wartung beendet ist oder es erfolgt innerhalb einer vorgegebenen Zeitspanne kein Datenaustausch zwischen Programmiergerät 3 und Reifendrucksensor 2, erfolgt ein Wechsel T45 in den Standmodus S5, in dem wiederum "advertisement indication frames" durch den Reifendrucksensor 2 ausgesendet werden.

Das zu Grunde liegende Prinzip des oben beschriebenen Verfahrens basiert auf den folgenden Profilen, die von Reifendrucksensor 2 und Programmiergerät 3 während der Modi-Wechsel jeweils eingenommen werden. Hierbei nimmt der Reifendrucksensor 2 zunächst eine zentrale Rolle ein, indem dieser passive Scans durchführt und bei Erkennung eines Programmiergeräts 3 in die dezentrale Rolle wechselt. Das Programmiergerät 3 hingegen startet in der dezentralen Rolle und sendet advertisement-Pakete aus. Das Programmiergerät 3 wechselt dann in die zentrale Rolle, wobei es dann nach verbindbaren Sensoren 2 sucht und sich dann mit diesen verbindet.

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Verfahren zum Betreiben einer Überwachungsvorrichtung (2) für zumindest einen Fahrzeugparameter, insbesondere ein Luftdrucksensor für den Fahrzeugparameter Reifendruck, wobei die Überwachungsvorrichtung (2) in Abhängigkeit der Geschwindigkeit des Fahrzeugs (1) in einem Fahrmodus (S1) oder in einem Standmodus betrieben wird, wobei im Standmodus Verbindungssignale zur drahtlosen Verbindung mit einer externen Vorrichtung (3, 4), insbesondere eine Konfigurationsvorrichtung für die Überwachungsvorrichtung (2) ausgesendet werden und wobei vor dem Wechsel in den Standmodus (S5) die Überwachungsvorrichtung (2) in einem ersten Zwischenmodus (S2) betrieben wird, wobei in dem ersten Zwischenmodus (S2) passiv nach drahtlosen Verbindungssignalen der externen Vorrichtung (3, 4) gesucht wird, wobei der Wechsel (T12) vom Fahrmodus (S1) in den ersten Zwischenmodus (S2) bei Unterschreiten eines ersten Fahrgeschwindigkeitsschwellwerts erfolgt, insbesondere wobei der der Wechsel (T12) vom Fahrmodus (S1) in den ersten Zwischenmodus (S2) bei Stillstand des Fahrzeugs (1) erfolgt, **dadurch gekennzeichnet, dass** der Wechsel (T21) von dem ersten Zwischenmodus (S2) in den Fahrmodus (S1) bei Überschreiten eines zweiten Fahrgeschwindigkeitsschwellwerts erfolgt, wobei die beiden Fahrgeschwindigkeitsschwellwerte unterschiedlich sind, vorzugsweise wobei der zweite Fahrgeschwindigkeitsschwellwert größer ist als der erste Fahrgeschwindigkeitsschwellwert.

2. Verfahren gemäß Anspruch 1, wobei der Wechsel (T25) vom ersten Zwischenmodus (S2) in den Standmodus (S5) nach Ablauf einer vorgegebenen Zeitspanne erfolgt, insbesondere, wenn während der Zeitspanne keine externe Vorrichtung (3, 4) erkannt wurde.

3. Verfahren gemäß einem der Ansprüche 1-2, wobei, wenn im ersten Zwischenmodus (S2) eine externe Vorrichtung (3, 4) erkannt wird, in einen zweiten Zwischenmodus (S3) gewechselt wird und die Überwachungsvorrichtung (2) Verbindungssignale zur Aufnahme einer Drahtlos-Verbindung mit der erkannten externen Vorrichtung (3, 4) aussendet.

4. Verfahren gemäß Anspruch 3, wobei, wenn im zweiten Zwischenzustand (S3) nach Ablauf einer vorgegebenen Zeitspanne, insbesondere, wenn während der Zeitspanne keine Drahtlos-Verbindung mit der erkannten externen Vorrichtung (3, 4) erfolgt ist, vom zweiten Zwischenzustand (S3) in den ersten Zwischenzustand (S2) gewechselt wird.

5. Verfahren gemäß einem der Ansprüche 1-4, wobei, wenn eine erfolgte Drahtlos-Verbindung der Überwachungsvorrichtung (2) mit der externen Vorrichtung (3, 4) unterbrochen und/oder abgebrochen wird, insbesondere nach einer vorgegebenen Zeitspanne, vorzugsweise wobei in dieser Zeitspanne keine Daten mehr zwischen externer Vorrichtung (3, 4) und Überwachungsvorrichtung (2) übertragen wurden, ein Wechsel in den Standmodus (S5) erfolgt.

6. Verfahren gemäß einem der Ansprüche 1-5, wobei im zweiten Zwischenzustand (S3) die Sendeleistung der Überwachungsvorrichtung (2) zumindest zeitweise reduziert wird, wenn Verbindungssignale zum Verbinden mit der externen Vorrichtung (3, 4) ausgesendet werden.

7. Verfahren gemäß Anspruch 3, wobei im ersten Zwischenzustand (S2) Identifikationsdaten einer erkannten externen Vorrichtung (3, 4), insbesondere eine MAC-ID, gespeichert werden und entsprechend im zweiten Zwischenzustand (S3) bei der Initiierung der Drahtlos-Verbindung mit der externen Vorrichtung (3, 4) genutzt werden.

8. Verfahren gemäß einem der Ansprüche 1-7, wobei die Drahtlos-Verbindung auf Bluetooth, insbesondere auf der Bluetooth Low Energy-Funktechnik beruht.

9. Überwachungsvorrichtung (2) für zumindest ein Fahrzeugparameter eines Fahrzeugs (1), insbesondere ein Luftdrucksensor für den Fahrzeugparameter Reifendruck, wobei die Überwachungsvorrichtung (2) in Abhängigkeit der Geschwindigkeit des Fahrzeugs (1) in einem Fahrmodus (S1) oder in einem Standmodus (S5) betreibbar ist, wobei die Überwachungsvorrichtung (2) ausgebildet ist, im Standmodus (S5) Verbindungssignale zur drahtlosen Verbindung mit einer externen Vorrichtung (3, 4), insbesondere eine Konfigurationsvorrichtung für die Überwachungsvorrichtung (2) auszusenden und vor einem Wechsel in den Standmodus (S5) in einem ersten Zwischenmodus (S2) betreibbar ist, wobei in dem ersten Zwischenmodus (S2) passiv nach drahtlosen Verbindungssignalen einer externen Vorrichtung (3, 4) gesucht wird, wobei der Wechsel (T12) vom Fahrmodus (S1) in den ersten Zwischenmodus (S2) bei Unterschreiten eines ersten Fahrgeschwindigkeitsschwellwerts erfolgt, insbesondere wobei der der Wechsel (T12) vom Fahrmodus (S1) in den ersten Zwischenmodus (S2) bei Stillstand des Fahrzeugs (1) erfolgt, **dadurch gekennzeichnet, dass** der Wechsel (T21) von dem ersten Zwischenmodus (S2) in den Fahrmodus (S1) bei Überschreiten eines zweiten Fahrgeschwindigkeitsschwellwerts erfolgt, wobei die beiden Fahrgeschwindigkeitsschwellwerte unterschiedlich sind, vorzugsweise wobei der zweite Fahrgeschwindigkeitsschwellwert größer ist als der erste Fahrgeschwindigkeitsschwellwert.

10. Fahrzeug (1) mit einer Überwachungsvorrichtung (2) gemäß Anspruch 10.

## Claims

1. Method for operating a monitoring device (2) for at least one vehicle parameter, in particular an air pressure sensor for the vehicle parameter of tyre pressure, wherein the monitoring device (2) is operated in a driving mode (S1) or in a stationary mode depending on the speed of the vehicle (1), wherein in the stationary mode connection signals for wireless connection to an external device (3, 4), in particular a configuration device for the monitoring device (2), are emitted, and wherein, before switching to the stationary mode (S5), the monitoring device (2) is operated in a first intermediate mode (S2), wherein in the first intermediate mode (S2) there is a passive search for wireless connection signals from the external device (3, 4), wherein the switch (T12) from the driving mode (S1) to the first intermediate mode (S2) takes place when a first driving speed threshold value is undershot, in particular wherein the switch (T12) from the driving mode (S1) to the first intermediate mode (S2) takes place when the vehicle (1) is at a standstill, **characterized in that** the switch (T21) from the first intermediate mode (S2) to the driving mode (S1) takes place when a second driving speed threshold value is exceeded, wherein the two driving speed threshold values are different, preferably wherein the second driving speed threshold value is greater than the first driving speed threshold value.

2. Method according to Claim 1, wherein the switch (T25) from the first intermediate mode (S2) to the stationary mode (S5) takes place after the expiry of a predefined period of time, in particular if no external device (3, 4) was detected during the period of time.

3. Method according to one of Claims 1 - 2, wherein, if an external device (3, 4) is detected in the first intermediate mode (S2), there is a switch to a second intermediate mode (S3) and the monitoring device (2) emits connection signals for establishing a wireless connection to the detected external device (3, 4).

4. Method according to Claim 3, wherein, if no wireless connection to the detected external device (3, 4) has taken place in the second intermediate state (S3) after expiry of a predefined period of time, in particular during the period of time, there is a switch from the second intermediate state (S3) to the first intermediate state (S2).

5. Method according to one of Claims 1-4, wherein, if a wireless connection of the monitoring device (2) to the external device (3, 4) is interrupted and/or terminated, in particular after a predefined period of time, preferably no further data were transmitted between the external device (3, 4) and the monitoring device (2) in this period time, there is a switch to the stationary mode (S5).

6. Method according to one of Claims 1 - 5, wherein in the second intermediate state (S3) the transmission power of the monitoring device (2) is at least temporarily reduced if connection signals for connection to the external device (3, 4) are emitted.

7. Method according to Claim 3, wherein in the first intermediate state (S2) identification data relating to a detected external device (3, 4), in particular a MAC ID, are stored and are used accordingly in the second intermediate state (S3) when initiating the wireless connection to the external device (3, 4).

8. Method according to one of Claims 1-7, wherein the wireless connection is based on Bluetooth, in particular on Bluetooth low energy radio technology.

9. Monitoring device (2) for at least one vehicle parameter of a vehicle (1), in particular an air pressure sensor for the vehicle parameter of tyre pressure, wherein the monitoring device (2) can be operated in a driving mode (S1) or in a stationary mode (S5) depending on the speed of the vehicle (1), wherein the monitoring device (2) is designed to emit in the stationary mode (S5) connection signals for wireless connection to an external device (3, 4), in particular a configuration device for the monitoring device (2), and, before a switch to the stationary mode (S5), can be operated in a first intermediate mode (S2), wherein in the first intermediate mode (S2) there is a passive search for wireless connection signals from an external device (3, 4), wherein the switch (T12) from the driving mode (S1) to the first intermediate mode (S2) takes place when a first driving speed threshold value is undershot, in particular wherein the switch (T12) from the driving mode (S1) to the first intermediate mode (S2) takes place when the vehicle (1) is at a standstill, **characterized in that** the switch (T21) from the first intermediate mode (S2) to the driving mode (S1) takes place when a second driving speed threshold value is exceeded, wherein the two driving speed threshold values are different, preferably wherein the second driving speed threshold value is greater than the first driving speed threshold value.

10. Vehicle (1) having a monitoring device (2) according to Claim 10.

## Revendications

1. Procédé pour faire fonctionner un dispositif de surveillance (2) pour 'au moins un paramètre de véhicule, notamment un capteur de pression d'air pour le paramètre de véhicule pression des pneus, le dispositif de surveillance (2) fonctionnant, en fonction de la vitesse du véhicule (1), dans un mode de conduite (S1) ou dans un mode d'arrêt ; dans le mode d'arrêt, des signaux de liaison pour la liaison sans fil avec un dispositif externe (3, 4), notamment un dispositif de configuration du dispositif de surveillance (2), étant émis, et le dispositif de surveillance (2) fonctionnant, avant le passage au mode d'arrêt (S5), dans un premier mode intermédiaire (S2) ; dans le premier mode intermédiaire (S2), une recherche passive de signaux de liaison sans fil du dispositif externe (3, 4) étant effectuée, le passage (T12) du mode de conduite (S1) au premier mode intermédiaire (S2) s'effectuant lorsque la vitesse du véhicule passe en dessous d'un premier seuil de vitesse de conduite, le passage (T12) du mode de conduite (S1) au premier mode intermédiaire (S2) s'effectuant notamment lorsque le véhicule (1) est à l'arrêt, **caractérisé en ce que** le passage (T21) du premier mode intermédiaire (S2) au mode de conduite (S1) s'effectue lorsque la vitesse du véhicule dépasse un second seuil de vitesse de conduite, les deux seuils de vitesse de conduite étant différents, de préférence le deuxième seuil de vitesse de conduite étant supérieur au premier seuil de vitesse de conduite.

2. Procédé selon la revendication 1, dans lequel le passage (T25) du premier mode intermédiaire (S2) au mode d'arrêt (S5) s'effectue après l'écoulement d'une période de temps prédéterminée, notamment lorsque, pendant ladite période de temps, aucun dispositif externe (3, 4) n'a été détecté.

3. Procédé selon l'une quelconque des revendications 1 à 2, dans lequel, lorsque, dans le premier mode intermédiaire (S2), un dispositif externe (3, 4) est détecté, un passage est effectué vers un deuxième mode intermédiaire (S3) et le dispositif de surveillance (2) émet des signaux de liaison pour l'établissement d'une liaison sans fil avec le dispositif externe détecté (3, 4).

4. Procédé selon la revendication 3, dans lequel, lorsque, dans le deuxième état intermédiaire (S3), après l'écoulement d'une période de temps prédéterminée, notamment lorsque, pendant ladite période de temps, aucune liaison sans fil avec le dispositif externe détecté (3, 4) n'a été établie, un passage est effectué du deuxième état intermédiaire (S3) vers le premier état intermédiaire (S2).

5. Procédé selon l'une quelconque des revendications 1 à 4, dans lequel, lorsque une liaison sans fil établie du dispositif de surveillance (2) avec le dispositif externe (3, 4) est interrompue et/ou terminée, notamment après l'écoulement d'une période de temps prédéterminée, de préférence lorsque, pendant cette période de temps, aucune donnée n'a plus été transmise entre le dispositif externe (3, 4) et le dispositif de surveillance (2), un passage vers le mode d'arrêt (S5) est effectué.

6. Procédé selon l'une quelconque des revendications 1 à 5, dans lequel, dans le deuxième état intermédiaire (S3), la puissance d'émission du dispositif de surveillance (2) est réduite au moins temporairement, lorsque des signaux de liaison pour la liaison avec le dispositif externe (3, 4) sont émis.

7. Procédé selon la revendication 3, dans lequel, dans le premier état intermédiaire (S2), des données d'identification d'un dispositif externe détecté (3, 4), notamment une adresse MAC, sont mémorisées et sont utilisées en conséquence, dans le deuxième état intermédiaire (S3), lors de l'initiation de la liaison sans fil avec le dispositif externe (3, 4).

8. Procédé selon l'une quelconque des revendications 1 à 7, dans lequel la liaison sans fil repose sur la technologie Bluetooth, en particulier sur la technologie radio Bluetooth Low Energy.

9. Dispositif de surveillance (2) pour au moins un paramètre de véhicule d'un véhicule (1), notamment un capteur de pression d'air pour le paramètre de véhicule pression des pneus, le dispositif de surveillance (2) pouvant fonctionner, en fonction de la vitesse du véhicule (1), dans un mode de conduite (S1) ou dans un mode d'arrêt (S5), le dispositif de surveillance (2) étant configuré pour émettre, dans le mode d'arrêt (S5), des signaux de liaison pour la liaison sans fil avec un dispositif externe (3, 4), notamment un dispositif de configuration pour le dispositif de surveillance (2), et pouvant fonctionner, avant un passage au mode d'arrêt (S5), dans un premier mode intermédiaire (S2) ; dans le premier mode intermédiaire (S2), une recherche passive de signaux de liaison sans fil d'un dispositif externe (3, 4) étant effectuée, le passage (T12) du mode de conduite (S1) au premier mode intermédiaire (S2) s'effectuant lors du passage en dessous d'un premier seuil de vitesse de conduite, le passage (T12) du mode de conduite (S1) au premier mode intermédiaire (S2) s'effectuant notamment lorsque le véhicule (1) est à l'arrêt, **caractérisé en ce que** le passage (T21) du premier mode intermédiaire (S2) au mode de conduite (S1) s'effectue lors du dépassement d'un deuxième seuil de vitesse de conduite, les deux seuils de vitesse de conduite étant différents, de préférence le deuxième seuil de vitesse de conduite étant supérieur au premier seuil de vitesse de conduite.

10. Véhicule (1) avec un dispositif de surveillance (2) selon la revendication 10.
